# EUROPÄISCHE PATENTSCHRIFT

(11) **EP 2 132 848 B1**
(45) Veröffentlichungstag und Bekanntmachung des Hinweises auf die Patenterteilung: **07.05.2014**
(21) Anmeldenummer: 08734472.7
(22) Anmeldetag: 04.04.2008
(51) Int. Cl.: H02G 3/08, H02G 3/12, E04F 19/08, H02B 1/40

(54) **VORRICHTUNG ZUR VERANKERUNG EINES INSTALLATIONSKASTENS IN EINER ÖFFNUNG IN EINER WANDSCHALE**
DEVICE FOR ANCHORING AN INSTALLATION CABINET IN AN OPENING IN A WALL SKIN
DISPOSITIF D'ANCRAGE D'UN COFFRET D'INSTALLATION DANS UNE OUVERTURE MÉNAGÉE DANS UNE PAROI MURALE

(30) Priorität: 04.04.2007 DE 102007016685; 26.01.2008 DE 102008006322
(43) Veröffentlichungstag der Anmeldung: 16.12.2009
(73) Patentinhaber: Hager Electro GmbH & Co. KG, 66440 Blieskastel (DE)
(72) Erfinder: GROS, Bernhard, 66459 Kirkel-Neuhäusel (DE); DISSEL, Klaus, 66663 Merzig (DE); KIEFER, Jürgen, 66440 Blieskastel (DE); ZIMMERMANN, Manfred, 66131 Saarbrücken (DE); AMENDOLA, Ettore, 66131 Saarbrücken (DE)
(74) Vertreter: Bernhardt, Reinhold
(86) Internationale Anmeldenummer: PCT/DE2008/000591
(87) Internationale Veröffentlichungsnummer: WO 2008/122280

(56) Entgegenhaltungen:
- WO-A-2004/100633
- DE-A1- 1 640 775
- DE-A1-102005 004 005
- DE-U1- 29 816 300
- DE-U1- 29 907 196

## Beschreibung

Die Erfindung betrifft eine Vorrichtung zur Verankerung eines Installationskastens, insbesondere eines Zähler- oder/und Verteilerkastens, in einer Öffnung in einer Wandschale, wobei der in die Öffnung versenkte Kasten am Rand der Öffnung mit einem Anschlag gegen die Vorderseite der Wandschale anliegt, mit einem Verankerungselement, das durch einen von der Vorderseite des Kastens her zugänglichen Antriebs- und Spannmechanismus in eine Position verschwenkbar ist, in der es die Wandschale am Rand der Öffnung hintergreift und den Kasten zwischen dem Anschlag und dem Verankerungselement einspannt, wobei ein Gegenhalter am Kasten in einer von dem Anschlag entfernten Position gebildet ist.

Eine solche Verankerungsvorrichtung ist aus der DE 298 16 300 U1 bekannt. Sie umfasst eine an den Seiten des Installationskastens angeordnete Befestigungskralle, die exzentrisch an einem Führungselement angeordnet ist, das axial verschiebbar und um mindestens 90 ° verdrehbar in einer Lagerhülse gelagert ist: Zur Befestigung des Installationskastens ist das Führungselement einseitig mit einem axial verlaufenden, manuell beaufschlagbaren Dreh- und Zugelement ausgestattet.

Die DE 16 40 775 beschreibt eine elektrische Einbaudose, die von vorne in eine Ausnehmung oder einen Durchbruch in einer Wand einsetzbar ist und die zur Befestigung der Einbaudose seitlich austretbar angeordnete Haltemittel aufweist, die sich von der Vorderseite her durch Schrauben betätigen lassen.

Aus der WO 2004/100633 A1 ist ein Befestigungsmechanismus für Kästen in einer Wandöffnung bekannt, der ein Kragenelement, das auf einer Vorderseite einer Wandschale anzuordnen ist, und ein zur Anlage auf der Rückseite der Wandschale anzuordnendes Presselement aufweist. Das Presselement ist dazu vorgesehen, zwischen einer Normalposition und einer Einsatzposition zu rotieren. In der Normalposition kann das Presselement mit der Rückseite der Wandschale zur Erzielung einer Haltekraft in Kontakt kommen. In der Normalposition kann der Kasten in seiner endgültigen Montageposition in der Wandöffnung angeordnet werden.

Durch Benutzung bekannte Verankerungsvorrichtungen weisen ein als Winkelhebel geformtes Verankerungselement auf, an dessen Drehpunkt eine Gewindebuchse angelenkt ist. In die Gewindebuchse greift eine Schraube ein, deren Kopf eine Öffnung in einem den Anschlag bildenden Flansch des Kastens hintergreift. Ein Hebelarm des Winkelhebels greift in einen Durchbruch in der Kastenwand ein, welcher eine Führung bildet. Beim Drehen der Schraube schwenkt der andere Hebelarm in eine zum Kastenboden parallele Stellung aus. Das Verankerungselement wird zusätzlich translatorisch in der Führung bewegt, bis der andere Hebelarm gegen die Rückseite der Wandschale anschlägt. Durch weitere Drehung lässt sich der Kasten nun an der Wandschale festspannen, wobei der durch den Kopf der Schraube hintergriffene Flansch einen Gegenhalter bildet.

Der Erfindung liegt die Aufgabe zugrunde, eine neue Vorrichtung der eingangs erwähnten Art zu schaffen, welche die Montage von Zähler- oder/und Verteilerkästen in Wandschalenöffnungen von Doppelwänden erleichtert.

Diese Aufgabe wird erfindungsgemäß dadurch gelöst, dass der Antriebs- und Spannmechanismus ein längliches Drehelement mit einem Gewinde umfasst und sich das Gewinde unter Bewegung des Verankerungselements durch translatorischen Vorschub des Drehelements in Richtung seiner Drehachse in Eingriff mit einem elastisch aufweitbaren Innengewinde des Antriebs- und Spannmechanismus bringen lässt.

Die Bildung des Gegenhalters am Kasten in einer vom Anschlag entfernten Position erlaubt eine Verankerung des Kastens in der Wandschalenöffnung ohne Benutzung des Anschlags als Gegenhalter. Ein z.B. als umlaufender Flansch ausgebildeter Anschlag kann dementsprechend schmal sein.

In einer besonders bevorzugten Ausführungsform der Erfindung sind das Verankerungselement und der Antriebs- und Spannmechanismus in einer von dem Zähler- oder/und Verteilerkasten getrennten Baueinheit zusammengefasst. An dem Kasten kann, vorzugsweise außenseitig, ein Sitz für die Aufnahme dieser Baueinheit vorgesehen sein, wobei der Gegenhalter vorzugsweise durch einen zum Kastenboden parallelen Boden des Sitzes gebildet ist. Die durch das Verankerungselement auf die Rückseite der hintergriffenen Wandschale ausgeübte Kraft erzeugt eine Gegenkraft an dem Boden des Sitzes.

In der bevorzugten Ausführungsform der Erfindung ist das Verankerungselement in einem tragenden Gehäuse drehbar gelagert und aus einer Öffnung des Gehäuses heraus ausschwenkbar. Beim Versenken des Zähler- oder/und Verteilerkastens in der Wandschalenöffnung befindet sich das Verankerungselement in einer Ausgangsposition, aus der es zur Verankerung des Kastens herausgeschwenkt wird.

Bei dem Gehäuse handelt es sich vorzugsweise um ein U-Profil, aus dessen offener Seite das Verankerungselement ausschwenkbar ist.

In der bevorzugten Ausführungsform der Erfindung umfasst das Verankerungselement einen zweiarmigen Hebel mit einem aus der Öffnung heraus ausschwenkbaren Hebelarm und einem im Gehäuse verbleibenden Hebelarm.

Das Drehelement weist zweckmäßigerweise eine Zahnstangenzahnung auf. Das genannte Gewinde bzw. die Zahnstangenzahnung kann im Eingriff mit einem Zahnkranzsegment stehen, welches an dem im Gehäuse verbleibenden Hebelarm des Verankerungselements gebildet ist, wobei die Zahnstangenzahnung vorzugsweise ringförmig umlaufende Zähne aufweist, die in jeder Drehstellung einen Eingriff mit dem Zahnkranzsegment ermöglichen.

Der Zahnstangenzahnung kann das Gewinde folgen, wobei der Gewindezahn vorzugsweise unterschiedlich steile Flanken derart aufweist, dass das Gewinde eine

Widerhakenwirkung ausübt. Ein mit der Zahnstangenzahnung und dem Gewinde ausgestattetes Drehelement lässt sich vorteilhaft zunächst in einer Translationsbewegung vorschieben, bei welcher die Zahnstangenzahnung das Verankerungselement verschwenkt und das Gewinde unter Aufweitung des Innengewindes in das Innengewinde eintritt. Eine Drehung des Drehelements ist dann nur zum Festspannen des Verankerungselements erforderlich, wobei der Gewindezahn als Widerhaken wirkt. Unabhängig von der Plattendicke bedarf es zum Festspannen jeweils nur des gleichen Drehwinkels.

Das genannte Innengewinde weist zweckmäßig Wendelabschnitte auf, die aneinander gegenüberliegenden, elastisch biegbaren, mit dem Gehäuse verbundenen Zungen gebildet sind.

Die Zungen können vorteilhaft einstückig mit dem Gehäuse verbunden und durch Einschnitte in der Wand des Gehäuses gebildet und gegen die Gehäusewand nach innen abgekantet sein.

In einer weiteren Ausgestaltung der Erfindung ist das Gewinde des Drehelements in eine Gewindebohrung einschraubbar. In einer rundum geschlossenen, im Vergleich zu dem Innengewinde der oben beschriebenen Ausführungsform einfacher herstellbaren Gewindebohrung lässt sich das Drehelement stabiler festziehen. Entsprechend stabil ist die Verankerung des Verteilerkastens in der Öffnung.

Vorzugsweise sind das Verankerungselement und der Antriebs- und Spannmechanismus in einer von dem Kasten getrennten Baueinheit zusammengefasst.

In einer weiteren Ausführungsform ist das Verankerungselement zunächst durch translatorischen Vorschub der Drehelements in Richtung seiner Drehachse ausschwenkbar.

In einer Ausgestaltung der Erfindung greifen in das Gewinde auf einander gegenüberliegenden Längsseiten des Drehelements in Richtung der Gewindeachse zueinander versetzte Zähne ein, die einen kurzen Abschnitt eines Innengewindes bilden und derart radial beweglich sind, dass sich das Drehelement zur Ausschwenkung des Verankerungselements rein translatorisch vorschieben lässt. Vorzugsweise sind die Zähne durch die translatorische Vorschubbewegung des Drehelements gegen eine elastische Kraft aus ihrer Eingriffsposition heraus verdrängbar, wobei die Zähne z.B. an den Enden elastisch abbiegbarer Hebelelemente angeordnet sind, die vorzugsweise einstückig mit den U-Schenkeln eines U-förmigen Trägergehäuses in Verbindung stehen.

Durch translatorisches Vorschieben des Drehelements lässt sich der Kasten in der Wandöffnung also vorläufig sichern. Anschließend kann durch Eindrehen des Drehelements in die Gewindebohrung der Verteilerkasten dann in der Wandöffnung fest verankert werden.

Die vorläufige Sicherung lässt sich nur durch Drehung des Drehelements aufheben, da das Drehelement durch die vorstehenden Zähne an einer translatorischen Rückbewegung entgegen der Vorschubrichtung gehindert ist. Zweckmäßig sind die Zähne zu diesem Zweck an den in die Vorschubrichtung weisenden Enden der Hebelelemente angeordnet. Bei der translatorischen Rückbewegung lassen sich die Hebelelemente dadurch nicht aufspreizen. Alternativ oder zusätzlich können die in die Vorschubrichtung weisenden Flanken der Zähne weniger steil als die Flanken auf der anderen Seite ausgebildet sein, um eine Rückbewegung zu verhindern.

Während in den vorangehend beschriebenen Ausführungsformen sich das Drehelement in axialer Richtung bewegen lässt, ist es in einer alfiernativen Ausführungsform der Erfindung an dem Gehäuse axial festgelegt. Ein solches festgelegtes Drehelement mit einem Gewinde kann mit dem Zahnkranzsegment einen Schneckenantrieb bilden, durch den trotz geringer Länge des im Gehäuse verbleibenden Hebels des Verankerungselements ein schnelles Verschwenken und die Übertragung großer Spannkräfte möglich ist.

Das mit einem Gewinde versehene, an dem Gehäuse axial festgelegte Drehelement kann auch als Spindelschraube für einen durch die Schraube in dem Gehäuse bewegbaren Schlitten dienen, wobei das Verankerungselement an dem Schlitten verschwenkbar gelagert ist.

Eine Verschwenkung des Verankerungselements durch Bewegung des Schlittens kann derart erfolgen, dass das Verankerungselement gegen den Schlitten federbeaufschlagt ist und der von der Stellung des Schlittens abhängige Schwenkwinkel jeweils durch einen Anschlag begrenzt wird.

Die Erfindung wird nachfolgend anhand von Ausführungsbeispielen und der beiliegenden, sich auf diese Ausführungsbeispiele beziehenden Zeichnungen näher erläutert. Es zeigen:

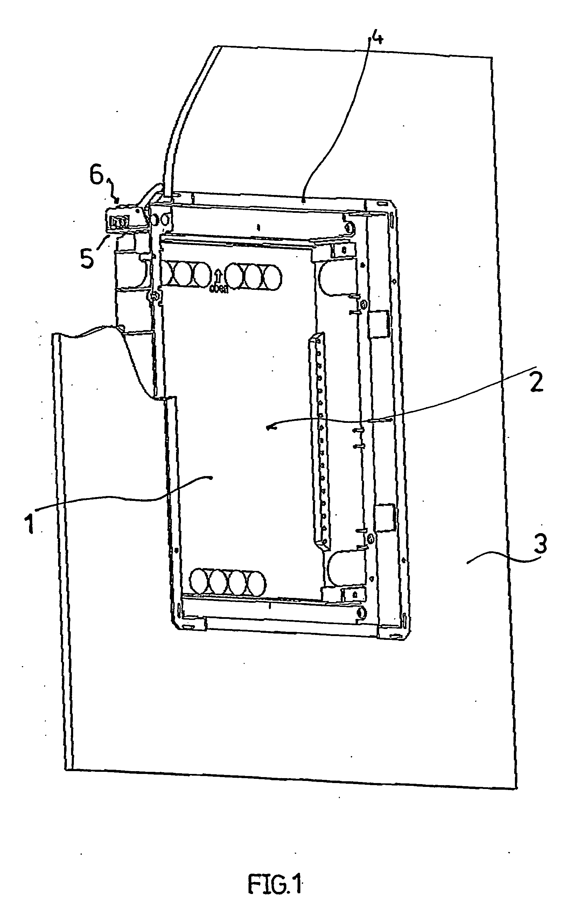

- Fig. 1: einen in einer Schale einer Doppelwand versenkten Verteilerkasten mit einer Verankerungsvorrichtung nach der Erfindung,
- Fig. 2 bis 4: die Funktion der Vorrichtung von Fig. 1 erläuternde Darstellungen,
- Fig. 5: einen in der Vorrichtung von Fig. 1 verwendeten Verankerungsmechanismus,
- Fig. 6: ein Drehelement des Verankerungsmechanismus von Fig. 5,
- Fig. 7 bis 9: weitere Ansichten des Verankerungsmechanismus von Fig. 5,
- Fig. 10: einen Verankerungsmechanismus gemäß einem zweiten Ausführungsbeispiel für die vorliegende Erfindung,
- Fig. 11 und 12: den Mechanismus von Fig. 10 erläuternde Darstellungen,
- Fig. 13: ein in dem Mechanismus von Fig. 10 verwendetes Drehelement,
- Fig. 14: eine Verankerungsvorrichtung gemäß einem dritten Ausführungsbeispiel für die vorliegende Erfindung,
- Fig. 15: einen in der Vorrichtung von Fig. 14 verwendeten Verankerungsmechanismus,
- Fig. 16 und 17: den Verankerungsmechanismus von Fig. 15 erläuternde Darstellungen,
- Fig. 18 und 19: Schnittdarstellungen des Verankerungsmechanismus von Fig. 15, und
- Fig. 20: eine durch den Verankerungsmechanismus von Fig. 15 an einer Doppelwandschale zu verankernden Verteilerkasten.
- Fig. 21: eine Teilansicht eines Verteilerkastens mit einer erfindungsgemäßen Vorrichtung zur Verankerung des Verteilerkastens in einer Öffnung in einer Wandschale,
- Fig. 22: eine Baueinheit, die ein Verankerungselement und einen Antriebsund Spannmechanismus umfasst,
- Fig. 23: die Baueinheit von Fig. 22 in einer Explosionsdarstellung,
- Fig. 24: ein Gehäuse der Baueinheit von Fig. 22 und 23,
- Fig. 25 bis 27: die Funktionsweise der Baueinheit von Fig. 22 bis 24 in einer ersten Einbauposition erläuternde Darstellungen, und
- Fig. 28 bis 30: die Funktionsweise der Baueinheit von Fig. 22 bis 24 in einer zweiten Einbaustellung erläuternde Darstellungen.

Ein wannenartiger Verteilerkasten 1 aus Kunststoff ist in eine Öffnung 2 in einer Doppelwandschale 3 hinein versenkt und liegt mit einem umlaufenden Flansch 4 am Rand der Öffnung 2 gegen die Doppelwandschale 3 an.

An den Ecken des Verteilerkastens 1 ist jeweils ein Sitz 5 für die Aufnahme einer der Verankerung des Verteilerkastens an der Doppelwandschale dienende Baueinheit 6 gebildet.

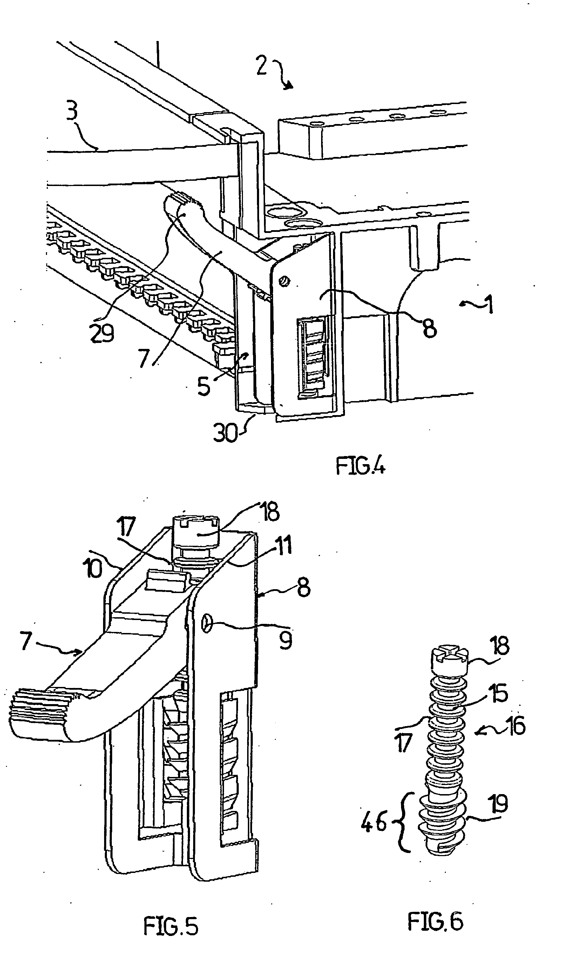

Die in den Fig. 5 - 9 gesondert dargestellte Baueinheit 6 umfasst ein Verankerungselement 7, das in einem U-förmigen Trägergehäuse 8 verschwenkbar gelagert ist. Die Schwenkachse 9 des Verankerungselements erstreckt sich zwischen den U-Schenkeln 10 und 11 des Trägergehäuses, wobei das Verankerungselement einen durch die offene Seite des U-förmigen Trägergehäuses hindurch aus dem Trägergehäuse ausschwenkbaren ersten Hebelarm 12 und einen im Trägergehäuse verbleibenden zweiten Hebelarm 13 umfasst.

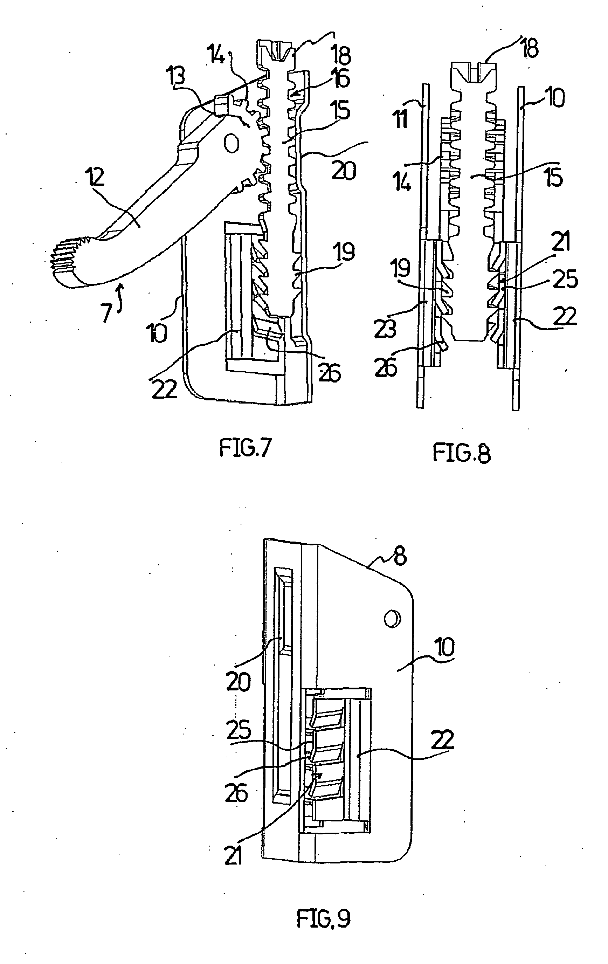

Wie die Fig. 7 und 8 erkennen lassen, ist an dem zweiten Hebelarm 13, der kürzer als der erste Hebelarm 12 ist, ein Zahnkranzsegment 14 gebildet, das im Eingriff mit einer Zahnstange 15 steht, die durch einen Abschnitt eines in dem Trägergehäuse 8 ferner untergebrachten länglichen Drehelements 16 gebildet ist. Der Zahnstangenabschnitt 15 weist ringförmig umlaufende Zähne 17 auf. An einem Ende schließt sich daran ein Kopf 18 mit einem Sitz für ein Drehwerkzeug an. An dem dem Kopf entgegengesetzten Ende des länglichen Drehelements 16 ist an einem Abschnitt 46 ein Gewinde 19 gebildet. Wie insbesondere Fig. 7 erkennen lässt, ist das Drehelement innerhalb des Gehäuses 8 zwischen dem Drehkranzsegment und einer Einbuchtung 20 am Gehäuse 8 geführt und in Richtung seiner Längsachse verschiebbar. Die Einbuchtung 20 setzt sich bis zu dem Gewinde 19 fort, ist jedoch entsprechend dem größeren Durchmesser des Gewindes 19 in der Tiefe verringert.

Das Gewinde 19 weist einen widerhakenartigen Zahn auf, dessen Flanke in Vorschubrichtung abfällt, dessen in die entgegengesetzte Richtung weisende Flanke aber senkrecht zur Drehachse steht.

Das Gewinde 19 greift in ein einander gegenüberliegende Abschnitte aufweisendes Innengewinde 21 ein, wobei die Innengewindeabschnitte an einstückig mit dem Trägergehäuse 8 verbundenen Zungen 22 und 23 gebildet sind. Die an drei Seiten durch je einen Einschnitt 24 in das Trägergehäuse begrenzten Zungen 22 und 23 sind nach innen abgebogen und weisen in entgegengesetzter Richtung abgebogene Endabschnitte 25 auf, die unter Bildung von Gewindezahn bzw. Wendelabschnitten ihrerseits eine geneigt zur Achse des Drehelements 16 verlaufende Abwinklung 26 aufweisen, welche in den Wendelgang des Außengewindes 19 eingreift.

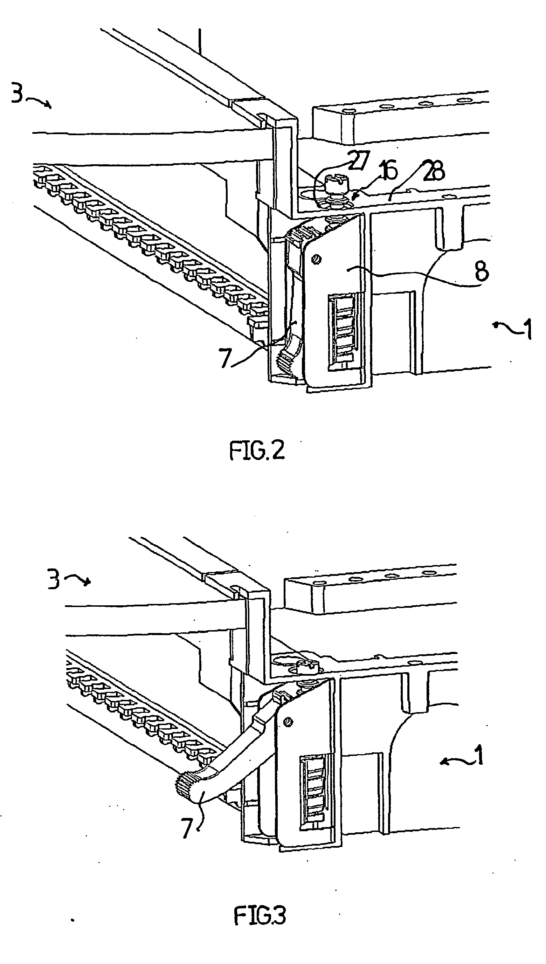

Zur Verankerung des Verteilerkastens 1 in der Öffnung 2 der Doppelwandschale 3 wird in die Sitze 5 an den Ecken des Verteilerkastens jeweils eine der anhand der Fig. 5 - 9 beschriebenen Baueinheiten 6 eingesetzt und der Verteilerkasten 1 bis zum Anschlag des Flansches 4 gegen die Doppelwandschale 3 in die Öffnung 2 eingesenkt. Das Verankerungselement 7 der Baueinheiten 6 befindet sich währenddessen in der in das Trägergehäuse 8 eingeschwenkten, in Fig. 2 gezeigten Stellung. Das Drehelement 16 steht aus dem Trägergehäuse 8 heraus vor und ragt durch eine Öffnung 27 hindurch, die in einer Abstufung 28 des Verteilerkastens 1 gebildet ist.

Zur Verankerung des Verteilerkastens 1 in der Öffnung 3 der Doppelwandschale 3 werden die Drehelemente 16 zunächst translatorisch in Richtung der Drehachse eingedrückt, wobei die in das Zahnkranzsegment 14 eingreifende Zahnstange 15 das Verankerungselement 7 in einer zur Wandebene senkrechten Ebene gemäß Fig. 3 aus dem Trägergehäuse 8 herausschwenkt.

In der in Fig. 4 gezeigten Endstellung hintergreift das Verankerungselement die Doppelwandschale 3 am Rand der Öffnung 2, d.h. es liegt mit einem Endabschnitt 29 gegen die Rückseite der Doppelwandschale 3 an.

Vor dem Anschlag des Verankerungselements 7 gegen die Doppelwandschale 3 hat das Gewinde 19 des Drehelements 16 das durch die Zungen 22 und 23 gebildete Innengewinde 21 erreicht. Die Form der Zahnung mit einer in Vorschubrichtung abfallenden Vorderflanke und einer zur Vorschubrichtung senkrechten Rückflanke erlaubt es, das Drehelement 16 weiter translatorisch bis zum Anschlag des Verankerungselements 7 gegen die Doppelwandschale 3 einzudrücken. Dies wird dadurch erreicht, dass die Zungen 22 und 23 entsprechend nachgeben. Erst in der Endphase wird das Drehelement 16 mit Hilfe eines Drehwerkzeugs am Kopf 18 gedreht, um die Verankerungselemente 7 mit der Doppelwandschale 3 zu verspannen. Eine Bodenplatte 30 des Sitzes 5, gegen welche das Trägergehäuse 8 mit einem Ende anliegt, bildet dabei einen Gegenhalter.

Durch Drehung des Drehelements 1 6 in entgegengesetzter Drehrichtung, lässt sich die Verspannung der Verankerungselemente 7 mit der Doppelwandschale 3 lösen und durch weitere Drehung lassen sich die Verankerungselemente von der Doppelwandschale abschwenken. Wenn das Gewinde 19 aus dem Innengewinde 21 ausgetreten ist, kann der Kasten 1 aus der Öffnung herausgehoben werden, wobei das Verankerungselement selbsttätig verschwenkt und das Drehelement 16 translatorisch durch die Öffnung 27 hindurch aus dem Gehäuse 8 herausgeschoben wird. Vorteilhaft ist nur ein Mindestmaß an Drehbewegung erforderlich, um den Kasten zu verankern oder aus der Verankerung zu lösen.

In den folgenden Figuren sind gleiche oder gleichwirkende Teile mit derselben Bezugszahl wie in den vorangehenden Figuren bezeichnet, wobei der betreffenden Bezugszahl der Buchstabe a, b bzw. c beigefügt ist.

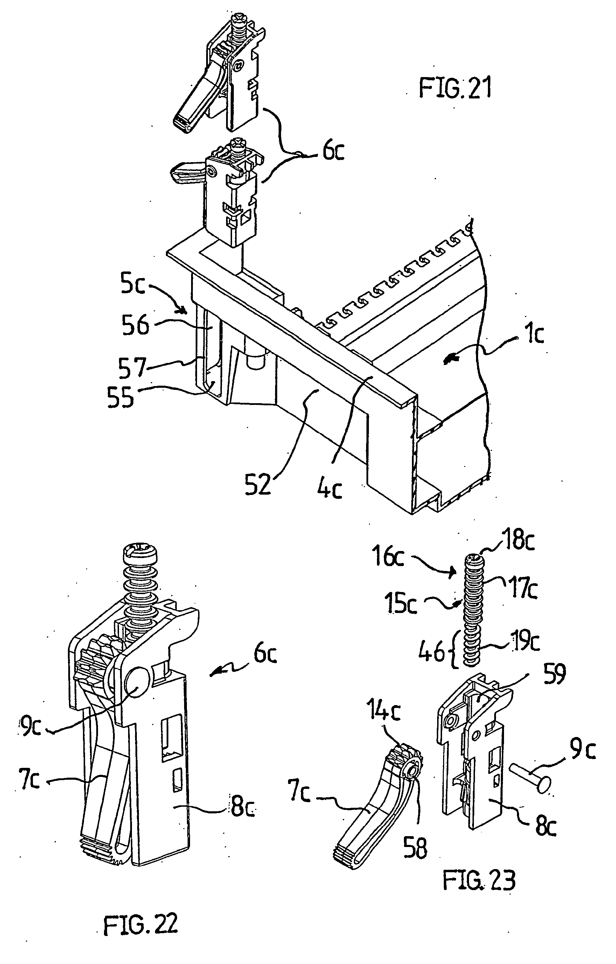

Im Folgenden wird auf die Fig. 21 bis 30 Bezug genommen.

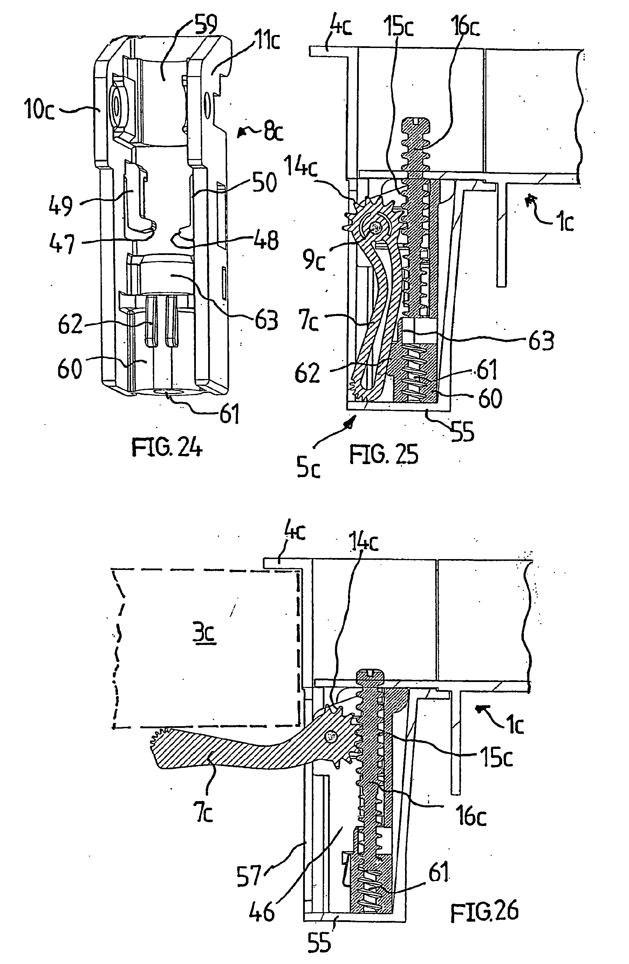

Ein wannenartiger, in Fig. 21 ausschnittsweise'dargestellter Verteilerkasten 1c ist zur Versenkung in eine Öffnung in einer Wandschale 3c (Fig. 26) einer Doppelwand vorgesehen, wobei ein an den (teilweise abnehmbaren) Seitenwänden 52 umlaufender Flansch 4c zum Anschlag gegen den Rand der Öffnung kommt. In der Darstellung von Fig. 21 fehlt eine der Seitenwände des Verteilerkastens.

An seinen vier Ecken weist der Verteilerkasten 1 c jeweils eine zur Montageseite des Verteilerkastens 1 c hin offenen Sitz 5c mit einer Bodenwand 55 auf, wobei in den zueinander senkrechten Außenwänden des Sitzes 5c jeweils ein Öffnungsschlitz 56 bzw. 57 gebildet ist.

In dem Sitz 5c lässt sich jeweils wahlweise in zwei zueinander senkrechten Winkelstellungen eine in Fig. 22 gesondert dargestellte Baueinheit 6c einsetzen. Die Baueinheit 6c umfasst ein im Querschnitt U-förmiges Gehäuse 8c, an dessen U-Schenkeln ein Verankerungselement 7c auf einem Achsbolzen 9c verschwenkbar gelagert ist. Das Verankerungselement 7c bildet einen zweiarmigen Hebel.

Die Baueinheit 6c umfasst ferner ein längliches, bolzenartiges Drehelement 16c mit einem kreuzweise geschlitzten Kopf 18c und einem Zahnstangenabschnitt 15c, an den sich ein Gewindeabschnitt 46 anschließt, der bis zu dem dem Kopf 18c entgegengesetzten Ende des Drehelements 16c reicht. Die ringförmig um das Drehelement 16c umlaufenden Zähne des Zahnstangenabschnitts 15c greifen in eine Zahnung 14c an dem Verankerungselement 7c ein, welche koaxial zu einer den Achsbolzen 9c im Verankerungselement 7c aufnehmenden Buchse 58 angeordnet ist.

Wie insbesondere aus Fig. 24 hervorgeht, ist an den U-Steg des Gehäuses 8c eine im Querschnitt halbkreisförmige Führung 59 für den Zahnstangenabschnitt 15c des Drehelements 16c angeformt. Unterhalb der Führung 59 stehen von den U-Schenkeln 10c und 11 c des Gehäuses 8c etwa einander gegenüberliegende Schwenkhebel 49 und 50 vor, die an einem Ende einstückig mit dem betreffenden U-Schenkel verbunden sind. Am anderen Ende weisen die Schwenkhebel 49,50 eine in Richtung zu dem Drehelement 16c vorstehende Nase 47 bzw. 48 auf, wobei die Nasen in Richtung der Drehachse des Drehelements 16c derart versetzt zueinander angeordnet sind, dass sie beim Eingriff in das Gewinde 19c des Gewindeabschnitts 46 einen kurzen, sich nur über einen Teil des Umfangs des Drehelements 16c erstreckenden Abschnitt eines Innengewindes bilden.

An seinem dem Boden 55 des betreffenden Sitzes 5c zugewandten Ende weist das Gehäuse 8c einen Blockabschnitt 60 mit einer zu der Führung 59 koaxialen Gewindebohrung 61 auf. In die Gewindebohrung 61 lässt sich der Gewindeabschnitt 46 des Drehelements 16c eindrehen. An der dem U-Steg abgewandten Seite des Blockabschnitts 60 stehen von dem Blockabschnitt 60 Anschlagböcke 62 für das Verankerungselement 7c vor.

In Richtung der Drehachse des Drehelements 16c erstreckt sich von dem Blockabschnitt 60 auf seiner dem U-Steg abgewandten Seite ein Wandabschnitt 63 zur Führung des Gewindeabschnitts 46 des Drehelements 16c.

Unter Bezugnahme auf die Fig. 25 bis 30 wird nachfolgend die Funktionsweise der vorangehend beschriebenen Verankerungsvorrichtung erläutert.

Beim Einsetzen des Verteilerkastens 1 c in die oben erwähnte Wandöffnung befinden sich die Verankerungselemente 7c der in den Sitz 5c des Verteilerkastens 1 c eingesetzten Baueinheiten 6c in der in Fig. 25 gezeigten Stellung, in welcher sie vollständig innerhalb des Sitzes 5c angeordnet sind und das Einsetzen des Verteilerkastens 1 c in die Wandöffnung nicht behindern.

Wenn der Verteilerkasten 1 c mit seinem Flansch 4c gegen den Rand der Wandöffnung anliegt, lässt sich der Verteilerkasten 1 c in der Wandöffnung vorläufig dadurch formschlüssig festhalten, dass die Drehelemente 16c zunächst translatorisch axial in Richtung zum Boden des Verteilerkastens vorgeschoben werden, bis das freie Ende des Gewindeabschnitts 46 die ihm zugewandte Öffnung der Gewindebohrung 61 erreicht, wobei die Führung 59 und der Wandabschnitt 63 das Drehelement 16c geeignet zentrieren. In diesem Zustand ist das Verankerungselements 7c gemäß Fig. 26 aus dem Sitz 5c herausgeschwenkt und sein freies Ende hat sich der zu hintergreifenden Rückseite der Wandschale 3c angenähert, so dass der Verteilerkasten nicht mehr aus der Öffnung heraustreten kann. Während des translatorischen Vorschubs geben die Schwenkhebel 49 und 50 nach, so dass die vorstehenden Nasen 47 und 48 über das Gewinde 19c des Gewindeabschnitts 46 hinweggleiten. Bei einer translatorischen Bewegung des Drehelements 16c in umgekehrter Richtung verhaken sich die Nasen 47 und 48 im Gewindeabschnitt 46 und halten das Drehelement 16c an Ort und Stelle fest.

Zur endgültigen Befestigung des Verteilerkastens 1 c in der Wandöffnung wird das Drehelement 16c nun unter Eindrehen des Gewindes 19c des Gewindeabschnitts 46 in die Gewindebohrung 61 in die in Fig. 26 gezeigte Anschlagstellung gebracht und festgezogen.

Zum Lösen des Verteilerkastens aus der Wandöffnung wird das Drehelement 16c in umgekehrter Richtung gedreht, wobei es zunächst aus der Gewindebohrung 61 heraustritt. Weitere Drehungen in dem durch die Nasen 47,48 gebildeten Innengewinde sind erforderlich, um den das Verankerungselement 7c in die in Fig. 25 gezeigte Stellung zurückzuverschwenken.

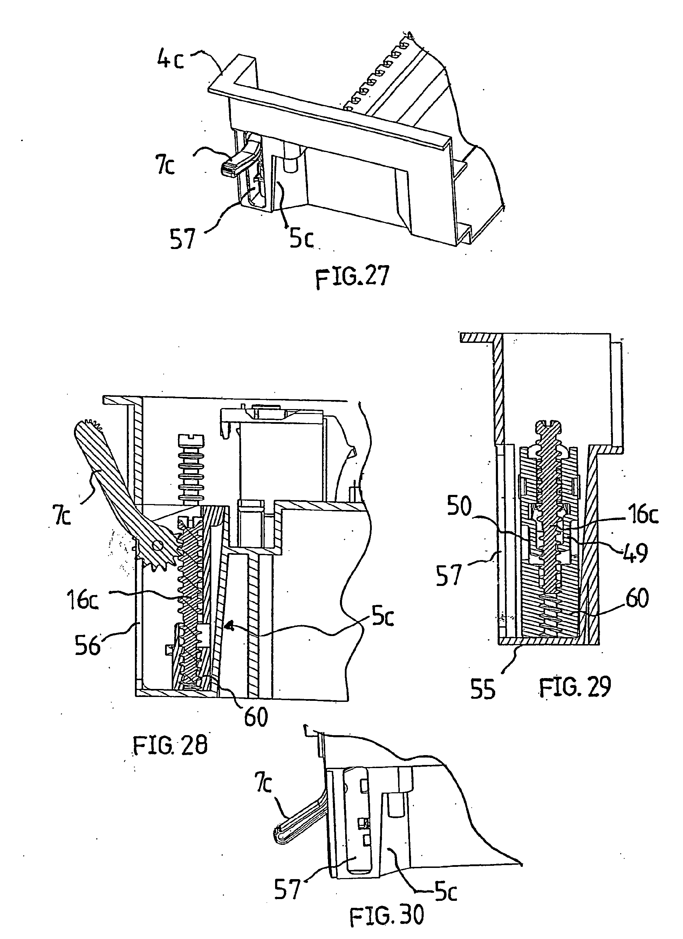

Die Fig. 25 bis 27 zeigen die Baueinheiten 6c in einer Position, in denen das Verankerungselement 7c aus dem Öffnungsschlitz 57 herausgeschwenkt wird. Die Fig. 28 bis 30 betreffen eine dazu um 90° verdrehte Position.

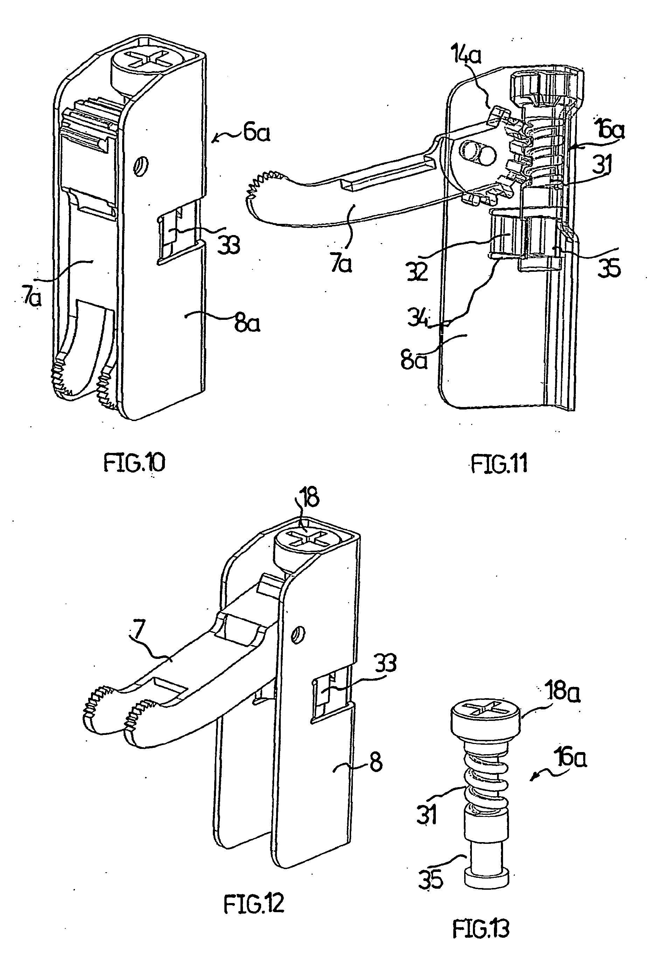

Eine in den Fig. 10 - 13 dargestellte Baueinheit 6a zur Verankerung eines Verteilerkastens mit einem Trägergehäuse 8a und einem Verankerungselement 7a weist ein Drehelement 16a mit einem Schneckengewinde 31 auf, das in ein Zahnkranzsegment 14a des Verankerungselements 7a eingreift.
Das Drehelement 16a ist axial an dem Gehäuse 8a festgelegt, indem durch Einschnitte 32 gebildete Zungen 33 und 34 in eine Ringnut 35 eingreifen. Die Ringnut 35 liegt in dem betreffenden Ausführungsbeispiel an dem dem Kopf 18a entgegengesetzten Ende des Drehelements.

Zur Verankerung eines Verteilerkastens ist das Drehelement 16a sowohl zur Verschwenkung aus der in Fig. 10 gezeigten Position zu drehen als auch durch weitere Drehung in der Anschlagposition zu verspannen.

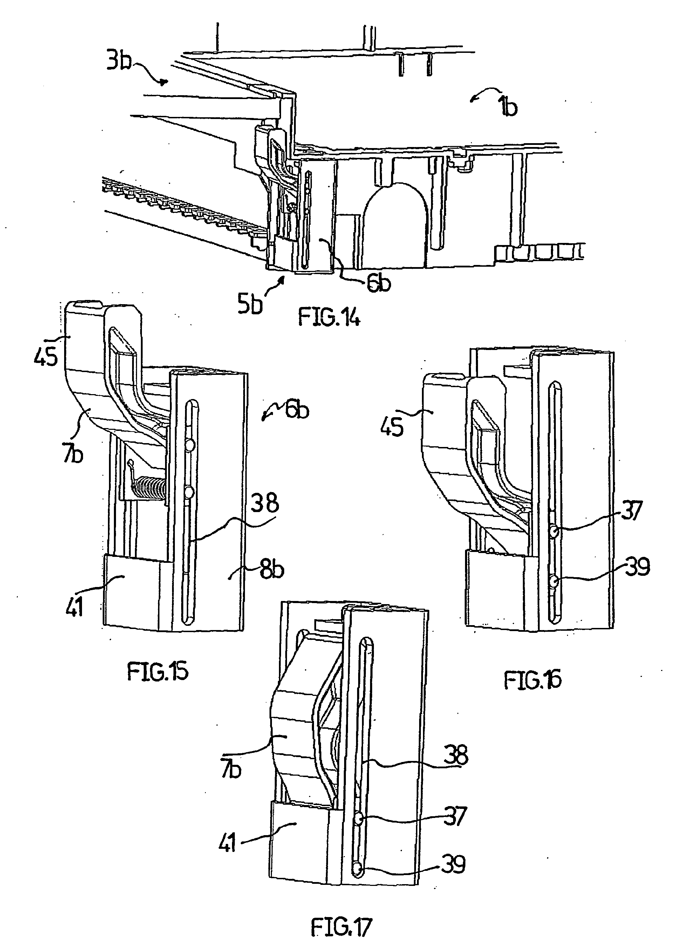

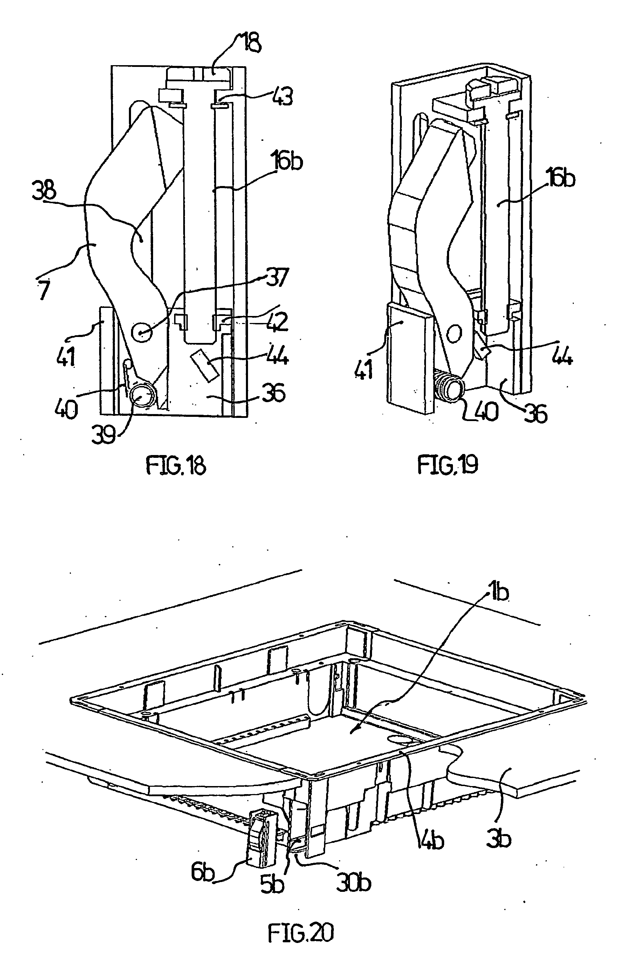

Eine in den Fig. 14 - 20 beschriebene Baueinheit 6b zur Verankerung eines Verteilerkastens 1 b weist ein Trägergehäuse 8b und einen Schlitten 36 auf, der sich mit Hilfe eines Drehelements 16b in dem Trägergehäuse translatorisch bewegen lässt. An dem Schlitten ist ein Verankerungselement 7b verschwenkbar gelagert, wobei ein Schwenkachsbolzen 37 in einander gegenüberliegende Langlöcher 38 eingreift.

In die Langlöcher 38 greift ferner ein zu dem Achsbolzen 37 paralleler Achsbolzen 39 ein, auf welchem eine Torsionsfeder 40 sitzt.

Zur Verankerung des Verteilerkastens 1 b wird die Baueinheit 6b in einen Sitz 5b an der Ecke des Verteilerkastens 1 b eingesetzt, wobei das Verankerungselement 7b die in den Fig. 17 - 20 gezeigte Position einnimmt. Diese Position ist durch einen Anschlag 41 an dem Trägergehäuse 8b gesichert. Das Drehelement 16b bildet eine Spindelschraube, die in ein an dem Schlitten 36 gebildetes Gewinde 42 eingreift. Bei 43 ist das Drehelement axial gegen das Gehäuse 8b festgelegt.

Bei Drehung des Drehelements 16b verschiebt sich der Schlitten 36 in Richtung der Drehachse des Drehelements, so dass das durch die Torsionsfeder 40 beaufschlagte Verankerungselement 7b aus dem Gehäuse 8b unter Entlanggleiten am Anschlag 41 ausschwenken kann, bis es durch Anlage gegen einen an dem Schlitten 36 gebildeten Anschlag 44 die in Fig. 14 bis 16 gezeigte Position erreicht, in welcher ein Endabschnitt 45 des Verankerungselements 7b etwa parallel zu den Langlöchern 38 verläuft. Durch weitere Drehung des Drehelements 16b und translatorische Verschiebung des Verankerungselements gelangt schließlich das freie Ende des Endabschnitts 45 in Anlage gegen die Rückseite der Doppelwandschale 3b.

## Patentansprüche

1. Vorrichtung zur Verankerung eines Installationskastens, insbesondere eines Zähler- oder/und Verteilerkastens (1;1c), in einer Öffnung (3;3c) in einer Wandschale (2), wobei der in die Öffnung (3) versenkte Kasten (1,1c) am Rand der Öffnung (3;3c) mit einem Anschlag (4) gegen die Vorderseite der Wandschale (2) anliegt, mit einem Verankerungselement (7;7c), das durch einen von der Vorderseite des Kastens (1;1c) her zugänglichen Antriebsund Spannmechanismus in eine Position bewegbar ist, in der es die Wandschale (2) am **Rand** der Öffnung (3;3c) hintergreift und den Kasten (1;1c) zwischen dem Anschlag (4) und dem Verankerungselement (7;7c) einspannt, wobei ein Gegenhalter (30) für das Verankerungselement (7;7c) am Kasten (1;1c) in einer von dem Anschlag (4;4c) entfernten Position gebildet ist,
**dadurch gekennzeichnet,**
**dass** der Antriebs- und Spannmechanismus ein längliches Drehelement (16;16c) mit einem Gewinde (19;19c) umfasst und sich das Gewinde (19;19c) unter Bewegung des Verankerungselements (7;7c) durch translatorischen Vorschub des Drehelements (16;16c) in Richtung seiner Drehachse in Eingriff mit einem elastisch aufweitbaren Innengewinde (21;47,48) des Antriebs- und Spannmechanismus bringen lässt.

2. Vorrichtung nach Anspruch 1,
**dadurch gekennzeichnet,**
**dass** das Verankerungselement (7;7c) in einem tragenden Gehäuse (8;8c) drehbar gelagert und aus einer Öffnung des Gehäuses (8;8c) heraus ausschwenkbar ist, wobei das Verankerungselement (7;7c), vorzugsweise aus einem das Gehäuse (8;8c) bildenden U-Profil heraus ausschwenkbar ist.

3. Vorrichtung nach Anspruch 1 oder 2,
**dadurch gekennzeichnet,**
**dass** das Verankerungselement (7;7c) als zweiarmiger Hebel mit einem aus der Öffnung heraus ausschwenkbaren Hebelarm (12) und einem im Gehäuse (8;8c) verbleibenden Hebelarm (13) ausgebildet ist.

4. Vorrichtung nach einem der Ansprüche 1 bis 3,
**dadurch gekennzeichnet,**
**dass** das Drehelement (16;16c) eine Zahnstangenzahnung (15;15c) umfasst.

5. Vorrichtung nach Anspruch 4,
**dadurch gekennzeichnet,**
**dass** das Gewinde (19,19c) bzw. die Zahnstangenzahnung (15;15c) im Eingriff mit einem Zahnkranzsegment (14;14c) steht, welches an dem in dem Gehäuse (8;8c) verbleibenden Hebelarm (13) des Verankerungselements (7;7c) gebildet ist, wobei die Zahnstangenzahnung (15;15c) vorzugsweise ringförmig umlaufende Zähne (17;17c) aufweist.

6. Vorrichtung nach Anspruch 4 oder 5,
**dadurch gekennzeichnet,**
**dass** das Gewinde (19;19c) unterschiedlich steile Zahnflanken aufweist.

7. Vorrichtung nach Anspruch 6,
**dadurch gekennzeichnet,**
**dass** das Innengewinde (21) Wendelabschnitte (26) aufweist, die aneinander gegenüberliegenden, elastisch biegbaren, mit dem Gehäuse (8) verbundenen Zungen (22,23) gebildet sind, wobei ggf. die Zungen (22,23) durch Einschnitte (24) in der Wand des Gehäuses (8) gebildet und gegen die Gehäusewand nach innen abgekantet sind.

8. Vorrichtung nach einem der Ansprüche 4 bis 7,
**dadurch gekennzeichnet,**
**dass** das Gewinde (19c) des Drehelements (16c) in eine Gewindebohrung (61) eindrehbar ist, wobei vorzugsweise das Verankerungselement (7c) zunächst durch translatorischen Vorschub des Drehelements (16c) in Richtung seiner Drehachse und dann weiter durch Eindrehen des Gewindes (19c) in die Gewindebohrung (61) aus dem Gehäuse (8c) heraus ausschwenkbar ist.

9. Vorrichtung nach Anspruch 8,
**dadurch gekennzeichnet,**
**dass** in das Gewinde (19c) des Drehelements (16c) auf einander gegenüberliegenden Längsseiten des Drehelements (16c) in Richtung der Gewindeachse zueinander versetzte Zähne (47,48) eingreifen, die einen Abschnitt eines Innengewindes bilden, wobei ggf. die Zähne (47,48) gegen eine elastische Kraft durch den translatorischen Vorschub des Drehelements (16c) aus ihrer Eingriffsposition heraus verdrängbar sind.

10. Vorrichtung nach Anspruch 9,
**dadurch gekennzeichnet,**
**dass** die Zähne (47,48) an den Enden elastisch abbiegbarer Hebelelemente (49,50) angeordnet sind und ggf. die Hebelelemente (49,50) mit U-Schenkeln eines im Querschnitt U-förmigen Gehäuses (8c) verbunden sind.

11. Vorrichtung nach Anspruch 9 oder 10.
**dadurch gekennzeichnet,**
**dass** die Zähne (47,48) auf ihrer in die Vorschubrichtung des Drehelements (16c) weisenden Seite eine steilere Flanke als auf der anderen Seite aufweisen, wobei die Zähne (47,48) vorzugsweise an den in die Vorschubrichtung des Drehelements (16c) weisenden Enden der Hebelelemente (49,50) angeordnet sind.

12. Vorrichtung nach einem der Ansprüche 1 bis 9,
**dadurch gekennzeichnet,**
**dass** das Drehelement (16) in dem Gehäuse (8) axial festgelegt ist.

13. Vorrichtung nach Anspruch 12,
**dadurch gekennzeichnet,**
**dass** das Drehelement (16) mit dem Zahnkranzsegment (14) einen Schneckenantrieb bildet.

14. Vorrichtung nach Anspruch 12
**dadurch gekennzeichnet,**
**dass** das Drehelement (16) mit einem in dem Gehäuse (8b) translatorisch verschiebbaren Schlitten (36), an dem das Verankerungselement (7) verschwenkbar gelagert ist, einen Spindelantrieb bildet.

15. Vorrichtung nach Anspruch 14,
**dadurch gekennzeichnet,**
**dass** das Drehelement durch eine Feder (40) beaufschlagt und der Schwenkwinkel abhängig von der Position des Schlittens (36) durch einen Anschlag (41,44) begrenzt ist.

## Claims

1. Device for anchoring an installation cabinet, in particular a meter and/or distributor cabinet (1; 1c), in an opening (3; 3c) in a wall skin (2), with the cabinet (1, 1c) which is recessed in the opening (3) bearing against the front face of the wall skin (2) at the edge of the opening (3; 3c) by way of a stop (4), having an anchoring element (7; 7c) which can be moved by a drive and clamping mechanism, which is accessible from the front face of the cabinet (1; 1c), to a position in which said anchoring element engages behind the wall skin (2) at the edge of the opening (3; 3c) and clamps the cabinet (1; 1c) between the stop (4) and the anchoring element (7; 7c), with a mating holder (30) for the anchoring element (7; 7c) being formed on the cabinet (1; 1c) in a position which is remote from the stop (4; 4c),
**characterized**
**in that** the drive and clamping mechanism comprises an elongate rotary element (16; 16c) with a thread (19; 19c) and the thread (19; 19c), with movement of the anchoring element (7; 7c), can be made to engage with an elastically expandable internal thread (21; 47, 48) of the drive and clamping mechanism by translatory advancement of the rotary element (16; 16c) in the direction of its rotation axis.

2. Device according to Claim 1,
**characterized**
**in that** the anchoring element (7; 7c) is rotatably mounted in a supporting housing (8; 8c) and can be pivoted out of an opening in the housing (8; 8c), with the anchoring element (7; 7c) preferably being able to be pivoted out of a U-profile which forms the housing (8; 8c).

3. Device according to Claim 1 or 2,
**characterized**
**in that** the anchoring element (7; 7c) is in the form of a two-armed lever with a lever arm (12), which can be pivoted out of the opening, and a lever arm (13) which remains in the housing (8; 8c).

4. Device according to one of Claims 1 to 3,
**characterized**
**in that** the rotary element (16; 16c) comprises a toothed rack tooth system (15; 15c).

5. Device according to Claim 4,
**characterized**
**in that** the thread (19; 19c) or the toothed rack tooth system (15; 15c) engages with a toothed ring segment (14; 14c) which is formed on that lever arm (13) of the anchoring element (7; 7c) which remains in the housing (8; 8c), with the toothed rack tooth system (15; 15c) preferably having teeth (17; 17c) which run in a ringlike manner.

6. Device according to Claim 4 or 5,
**characterized**
**in that** the thread (19; 19c) has flanks with different gradients.

7. Device according to Claim 6,
**characterized**
**in that** the internal thread (21) has helical portions (26) which are formed on tongues (22, 23) which are opposite one another, are elastically flexible and are connected to the housing (8), with, if appropriate, the tongues (22, 23) being formed by incisions (24) in the wall of the housing (8) and being bent inward toward the housing wall.

8. Device according to one of Claims 4 to 7,
**characterized**
**in that** the thread (19c) of the rotary element (16c) can be screwed into a threaded hole (61), with the anchoring element (7c) preferably being able to be pivoted out firstly by translatory advancement of the rotary element (16c) in the direction of its rotation axis, and then further out of the housing (8c) by the thread (19c) being screwed into the threaded hole (61).

9. Device according to Claim 8,
**characterized**
**in that** teeth (47, 48), which are offset in relation to one another in the direction of the thread axis and which form a portion of an internal thread, engage in the thread (19c) of the rotary element (16c) on opposite longitudinal sides of the rotary element (16c), with, if appropriate, the teeth (47, 48) being able to be forced out of their engagement position against an elastic force by the translatory advancement of the rotary element (16c).

10. Device according to Claim 9,
**characterized**
**in that** the teeth (47, 48) are arranged at the ends of elastically flexible lever elements (49, 50) and, if appropriate, the lever elements (49, 50) are connected to U limbs of a housing (8c) which has a U-shaped cross section.

11. Device according to Claim 9 or 10,
**characterized**
**in that** the teeth (47, 48) have a steeper flank on that side which points in the advancement direction of the rotary element (16c) than on the other side, with the teeth (47, 48) preferably being arranged at the ends of the lever elements (49, 50) which point in the advancement direction of the rotary element (16c).

12. Device according to one of Claims 1 to 9,
**characterized**
**in that** the rotary element (16) is axially fixed in the housing (8).

13. Device according to Claim 12,
**characterized**
**in that** the rotary element (16) forms a worm drive with the toothed ring segment (14).

14. Device according to Claim 12,
**characterized**
**in that** the rotary element (16) forms a spindle drive with a slide (36) which can be displaced in a translatory manner in the housing (8b) and on which the anchoring element (7) is mounted in a pivotable manner.

15. Device according to Claim 14,
**characterized**
**in that** the rotary element is acted on by a spring (40) and the pivot angle is limited by a stop (41, 44) as a function of the position of the slide (36).

## Revendications

1. Dispositif pour l'ancrage d'un coffret d'installation, en particulier d'un coffret de compteur et/ou d'un coffret de distributeur (1 ; 1c), dans une ouverture (3 ; 3c) dans une coque murale (2), dans lequel le coffret (1 ; 1c) enfoncé dans l'ouverture (3) s'applique contre la bordure de l'ouverture (3 ; 3c) avec une butée (4) contre la face antérieure de la coque murale (2), comprenant un élément d'ancrage (7 ; 7c) qui est déplaçable, par un mécanisme d'entraînement et de tensionnement accessible depuis la face antérieure du coffret (1 ; 1c), jusque dans une position dans laquelle il engage la coque murale (2) par l'arrière à la bordure de l'ouverture (3 ; 3c), et enserre le coffret (1 ; 1c) entre la butée (4) et l'élément d'ancrage (7 ; 7c), dans lequel un élément de maintien antagoniste (30) pour l'élément d'ancrage (7 ; 7c) est formé sur le coffret (1 ; 1c) dans une position éloignée de la butée (4 ; 4c),
**caractérisé en ce que**
le mécanisme d'entraînement et de tensionnement comprend un élément tournant allongé (16 ; 16c) avec un filetage (19 ; 19c) et le filetage (19 ; 19c) peut être amené, via un déplacement de l'élément d'ancrage (7 ; 7c) par une avance en translation de l'élément tournant (16 ; 16c) en direction de son axe de rotation, en engagement avec un filet intérieur (21 ; 47, 48) capable d'être élargi élastiquement du filet mécanisme d'entraînement et de tensionnement.

2. Dispositif selon la revendication 1,
**caractérisé en ce que** l'élément d'ancrage (7 ; 7c) est monté rotatif dans un boîtier porteur (8 ; 8c), et est capable de pivoter vers l'extérieur en sortant d'une ouverture du boîtier (8 ; 8c), et l'élément d'ancrage (7 ; 7c) est de préférence capable de pivoter vers l'extérieur en sortant d'un profilé en U formant le boîtier (8 ; 8c).

3. Dispositif selon la revendication 1 ou 2,
**caractérisé en ce que** l'élément d'ancrage (7 ; 7c) est réalisé comme un levier à deux bras avec un bras de levier (12) capable de pivoter vers l'extérieur en sortant de l'ouverture, et un bras de levier (13) qui reste dans le boîtier (8 ; 8c).

4. Dispositif selon l'une des revendications 1 à 3,
**caractérisé en ce que** l'élément tournant (16 ; 16c) comprend une denture de crémaillère (15 ; 15c).

5. Dispositif selon la revendication 4,
**caractérisé en ce que** le filetage (19 ; 19c) ou respectivement la denture de crémaillère (15 ; 15c) est en engagement avec un segment de couronne dentée (14 ; 14c) qui est formé sur le bras de levier (13), qui reste dans le boîtier (8 ; 8c), de l'élément d'ancrage (7 ; 7c), dans lequel la denture de crémaillère (15 ;15c) comprend de préférence des dents périphériques (17 ; 17c) de forme annulaire.

6. Dispositif selon la revendication 4 ou 5,
**caractérisé en ce que** le filetage (19 ; 19c) comprend des dents avec des flancs de pentes différentes.

7. Dispositif selon la revendication 6,
**caractérisé en ce que** le filet intérieur (21) comprend des tronçons de spires (26) qui sont formés par des languettes (22, 23) capables de fléchir élastiquement, opposées les unes aux autres et reliées avec le boîtier (8), dans lequel les languettes (22, 23) sont le cas échéant formées par des entailles (24) dans la paroi du boîtier (8) et sont rabattues vers l'intérieur contre la paroi du boîtier.

8. Dispositif selon l'une des revendications 4 à 7,
**caractérisé en ce que** le filetage (19c) de l'élément tournant (16c) est susceptible d'être vissé dans un perçage à pas de vis intérieur (61), dans lequel de préférence l'élément d'ancrage (7c) est déplaçable tout d'abord par avance en translation de l'élément tournant (16c) en direction de son axe de rotation, et est ensuite capable de pivoter hors du boîtier (8c) par vissage du filetage (19c) dans l'orifice fileté intérieur (61).

9. Dispositif selon la revendication 8,
**caractérisé en ce que** des dents (47, 48) décalées les unes par rapport aux autres en direction de l'axe du pas de vis s'engagent dans le filetage (19c) de l'élément tournant (16c) sur les côtés longitudinaux mutuellement opposés de l'élément tournant (16c), dents qui forment un tronçon d'un pas de vis intérieur, dans lequel les dents (47, 48) sont le cas échéant susceptibles d'être chassées hors de leur position d'engagement à l'encontre d'une force élastique du fait de l'avance en translation de l'élément tournant (16c).

10. Dispositif selon la revendication 9,
**caractérisé en ce que** les dents (47, 48) sont agencées aux extrémités d'éléments de levier (49, 50) susceptibles d'être fléchis élastiquement, et les éléments de levier (49, 50) sont le cas échéant reliés avec les branches en U d'un boîtier (8c) à section en forme de U.

11. Dispositif selon la revendication 9 ou 10,
**caractérisé en ce que** les dents (47, 48) présentent, sur leur côté tourné dans la direction d'avance de l'élément tournant (16c), un flanc plus raide que sur l'autre côté, dans lequel les dents (47, 48) sont de préférence agencées aux extrémités, tournées dans la direction d'avance de l'élément tournant (16c), des éléments de levier (49, 50).

12. Dispositif selon l'une des revendications 1 à 9,
**caractérisé en ce que** l'élément tournant (16) est immobilisé axialement dans le boîtier (8).

13. Dispositif selon la revendication 12,
**caractérisé en ce que** l'élément tournant (16) forme avec le segment de couronne dentée (14) un entraînement à vis sans fin.

14. Dispositif selon la revendication 12,
**caractérisé en ce que** l'élément tournant (16) forme, avec un chariot (36) déplaçable en translation dans le boîtier (8b) et sur lequel l'élément d'ancrage (7) est monté avec possibilité de pivotement, un entraînement à broche.

15. Dispositif selon la revendication 14,
**caractérisé en ce que** l'élément tournant est sollicité par un ressort (40) et l'angle de pivotement est limité en fonction de la position du chariot (36) par une butée (41, 44).
